Europäisches Patentamt

European Patent Office

Office européen des brevets

(11) Publication number: **0 661 470 A2**

# EUROPEAN PATENT APPLICATION

(21) Application number: 94119285.8

(22) Date of filing: 07.12.94

(51) Int. Cl.6: **F16C 33/12**

(30) Priority: 27.12.93 JP 352808/93
23.03.94 JP 78120/94

(43) Date of publication of application:
05.07.95 Bulletin 95/27

(84) Designated Contracting States:
**DE FR GB IT**

(71) Applicant: **STARLITE CO., LTD.**
**1-71, Tokuan 1-chome,**
**Tsurumi-ku**
**Osaka-shi,**
**Osaka (JP)**

(72) Inventor: **Saigo, Takamitsu, c/o Starlite Co.,**
**Ltd.**
**1-71, Tokuan 1-chome,**
**Tsurumi-ku**

**Osaka-shi,**
**Osaka (JP)**
Inventor: **Kobayashi, Takashi, c/o Starlite Co.,**
**Ltd.**
**1-71, Tokuan 1-chome,**
**Tsurumi-ku**
**Osaka-shi,**
**Osaka (JP)**
Inventor: **Suzuki, Eiji, c/o Starlite Co., Ltd.**
**1-71, Tokuan 1-chome,**
**Tsurumi-ku**
**Osaka-shi,**
**Osaka (JP)**

(74) Representative: **Türk, Gille, Hrabal, Leifert**
**Brucknerstrasse 20**
**D-40593 Düsseldorf (DE)**

(54) **Sliding Bearing and Counter Parts.**

(57) The invention has been newly deviced in relation to a sliding member of less wear and low coefficient of friction, particularly to a structure of a sliding surface of a sliding parts for a sliding shaft and a counter sliding bearing.

For the aimed purpose, the inventors have found that the surface of the sliding shaft, when provided with random irregularity of surface roughness of 0.2 to 20μm or lower (by JIS, Rz indication), has favourable performance in comparison with the conventional directional irregularity or a plain face as a mirror surface.

Also, a sliding surface on the bearing, when provided with two-dimensionally random irregularity of roughness defined by Rz values of 20 to 500μm or a pattern of small and independent recesses and/or protuberances of 20 μm or more in depth, can exhibit the same effect as of the above.

The shaft or bearing having the above structure has durability in dry and long use to be effectively applicable to precision machines, particularly, copying machines and a sliding device for use at high and low temperature housed in nuclear or cosmic apparatuses.

F I G. 1

EP 0 661 470 A2

BACKGROUND OF THE INVENTION

1. Field of the Invention

The present invention relates to a sliding bearing and counter parts rubbed against the sliding bearing used in dry state in the art of various industrial apparatuses, office machines and tools including heat roll for copying machine, transportation machineries and hydrallic (or pneumatic) machineries, and also to use of the sliding bearing and counter parts.

The sliding bearings are journal sliding bearing for journalling a shaft or a roll neck, a thrust washer for a thrust part, a guide bush for guiding parts of reciprocal movements, or the like. The present invention does not relate to roll bearing such as a ball bearing, a roller bearing, etc. The counter parts rubbed against the sliding bearing are the abovesaid shaft, roll neck, thrust part, reciprocal movement guiding shaft, etc. Such counter parts are hereunder called a "shaft" collectivley.

Recently required in the art field above are a novel shaft and a sliding bearing which satisfy needs of maintenance-free, oilless for application in vacuum systems, low wear for use in precision apparatuses, low-dust, low friction and lightweight for energy-saving.

2. Description of the Related Art

Generally three kinds of methods for improvement of the art responsive to the above needs have been proposed hitherto.

A first method involves hard facing of shaft. The hardening of the shaft face prevents surface failure of the shaft, in turn, reduces friction on the shaft as well as wear of the corresponding sliding bearing. The method may employ quenching or hard plating for a steel shaft, anodic treatment for an aluminium shaft, ceramic coating with CVD, or the like.

Although the techniques show effects to some extent, they have such defects as being insufficient in effects while costing much or being restricted in selection of materials.

A second method is that surfaces of the shaft and the sliding bearing are finished to be extremely smooth as a mirror. The method may occasionally have an effect for reduction of wear of the sliding bearing, but may lead to increase of friction without liquid lubricant such as oil, resulting in seizure causing damages of the shaft surface and increase of wear of the sliding bearing.

A third method solving the problems involve use of sliding bearing material superior in self lubricity. Various kinds of sliding bearing materials of polymer or metal filled with solid lubricants superior in lubricity, such as polytetrafluoroethylene, graphite or molybdenum disulfide have been developed.

This kind of materials are said to exhibit excellent sliding performance generally by forming a transfer film on the surface of the shaft or sliding bearing. Many of the materials for sliding bearing have effects for reducing friction and wear while not fully satisfying the required performance under severe use conditions or when the counter shaft materials are soft metal, such as aluminium, likely to be damaged on the shaft surface. Furthermore, the materials when filled with the solid lubricant often lower in strength property and increase in wear although friction is reduced.

SUMMARY OF THE INVENTION

The inventors have studied basically the problems of the foregoing conventional art and achieved the present invention that solves the problems with the following surprising method and provides dry sliding parts (the shaft and sliding bearing) characterized in low wear, low dust, low friction and long life expectancy.

The inventors have found that the excellent sliding performance can be obtained by providing specific irregularity on the sliding surface of the shaft and/or the sliding bearing positively (reverse to the concept in this regard in the conventional art).

In more detail, the discovery by the inventors are that excellent wear resistance and low friction property are obtained, contrarily to the conventional common sense, by providing the sliding surface of the shaft with "two-dimensionally random irregularity having specific roughness", for example, through sandblast process, deformation processing using devices of irregular surfaces or chemical corrosion method, or by providing the sliding surface of the sliding bearing with "two-dimensionally ramdom irregularity having specific roughness", for example, through sandblast process, or with "irregularity having specific depth and pattern" through machining. Also, plastic sliding bearing may be provided on the surface with specific irregularity by injection molding using mold having the corresponding specific irregularity.

3

It is inferred in the shaft that trapping effect of wear particles (transfer particles) by the shaft surface having random irregularity facilitates formation of the transfer film improving the sliding performance, so that coefficient of friction and wear are reduced to low level. Also, formation of the transfer film on the shaft surface is inferred to prevent damages of the shaft surface.

On the other hand, in case of the surface having directional irregularity, it can be speculated that the wear particles (transfer particles) are pushed out along the groove to the outside of the slide surface, or a mirror-like quite smooth surface is poor in the trapping effect. In either case, it is inferred that formation of the transferred film for enabling desirable sliding is insufficient.

Functioning mechanism is not enough clear for random irregularity or irregularity of specific patterns provided on the surface of sliding bearing. Also, the above inference is based on a hypothesis of formation of the transfer film. Although the present invention is based basically on the hypothesis, achievement of the invention is not merely by the hypothesis but also by the results of various comparative experiments detailed later.

## BRIEF DESCRIPTION OF THE DRAWINGS

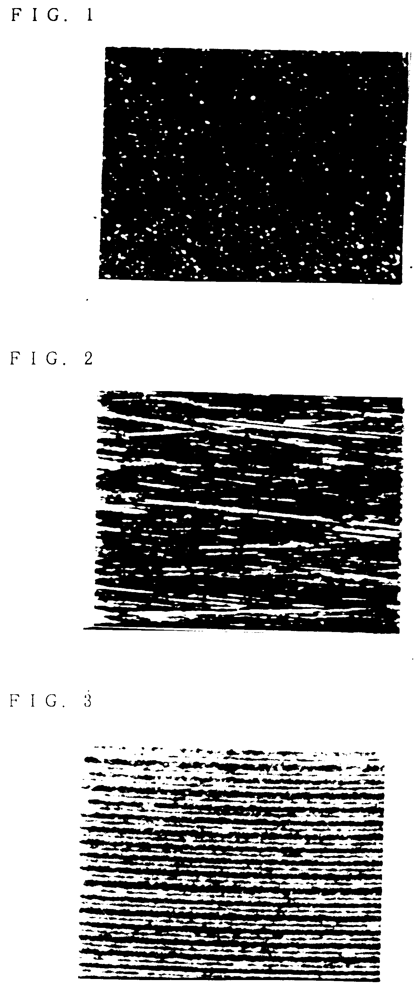

Fig. 1 is a microphotograph (enlarged 43 times) of the shaft surface tested in Example 10 (Rz value: 6.31 $\mu$m, blast-processed, random irregularity).

Fig. 2 is a microphotograph (enlarged 43 times) of the shaft surface tested in Example 14 (Rz: 6.15 $\mu$m, surface finished by grinding, directional irregularity, grinding: from left to right in the photograph).

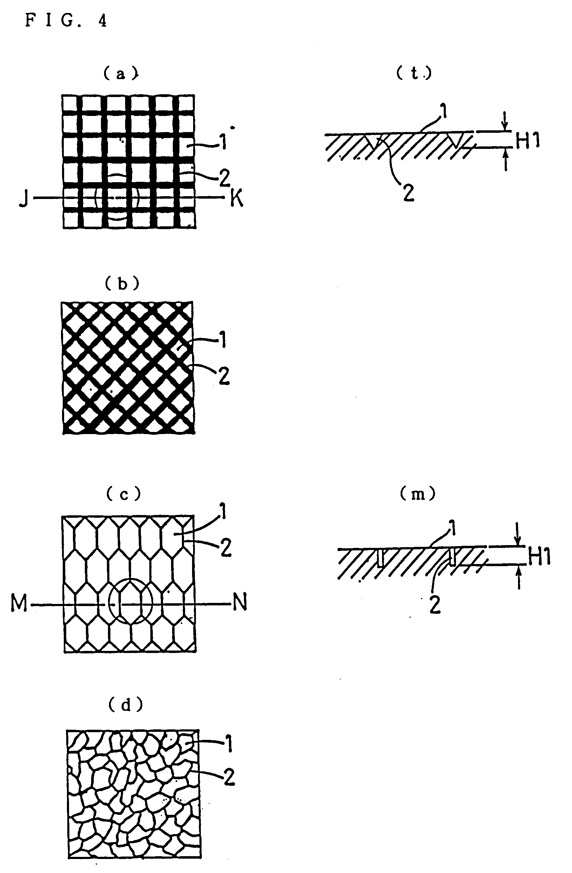

Fig. 3 is a microphotograph (enlarged 43 times) of the shaft surface tested in Example 16 (Rz: 6.23 $\mu$m, surface finished by cutting, directional irregularity shown with the substantially same Rz values, cutting: from left to right in the photograph).

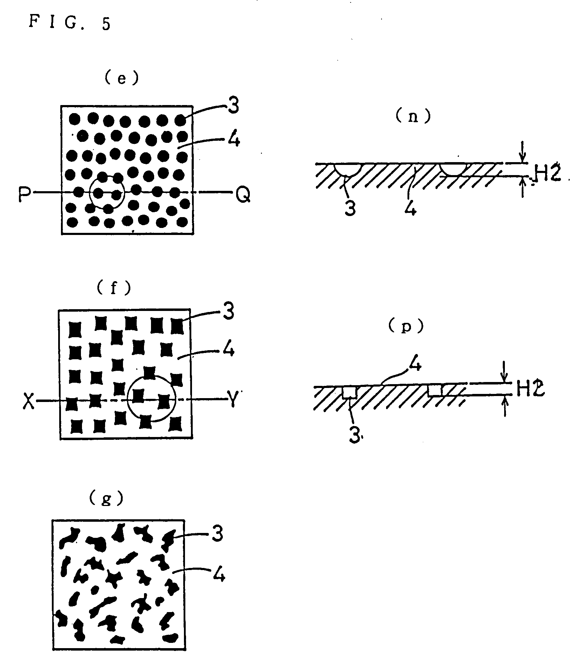

Fig. 4 shows an example (embodiment) of sliding bearing surface having protuberances each formed two-dimensionally independently, wherein Fig. 4(a) shows a pattern of the protuberances arranged as crossed, Fig. 4(b) a pattern of the slanted protuberances, Fig. 4(c) a hexagonal pattern of the protuberances, Fig. 4(d) a miscellaneous pattern, Fig. 4(t) a sectional side view of Fig. 4(a) taken from the line J-K (the circled part is enlarged), and Fig. 4(m) a sectional side view of Fig. 4(c) taken from the line M-N (the circled part is enlarged).

Fig. 5 shows an example (embodiment) of sliding bearing surface having recesses each formed two-dimensionally independently, wherein Fig. 5(e) shows a pattern of the round recesses, Fig. 5(f) a pattern of the square recesses, Fig. 5(g) miscellaneous recesses, Fig. 5(n) a sectional side view of Fig. 5(e) taken from the line P-Q (the circled part is enlarged), and Fig. 5(p) a sectional side view of Fig. 5(f) taken from the line X-Y (the circled part is enlarged).

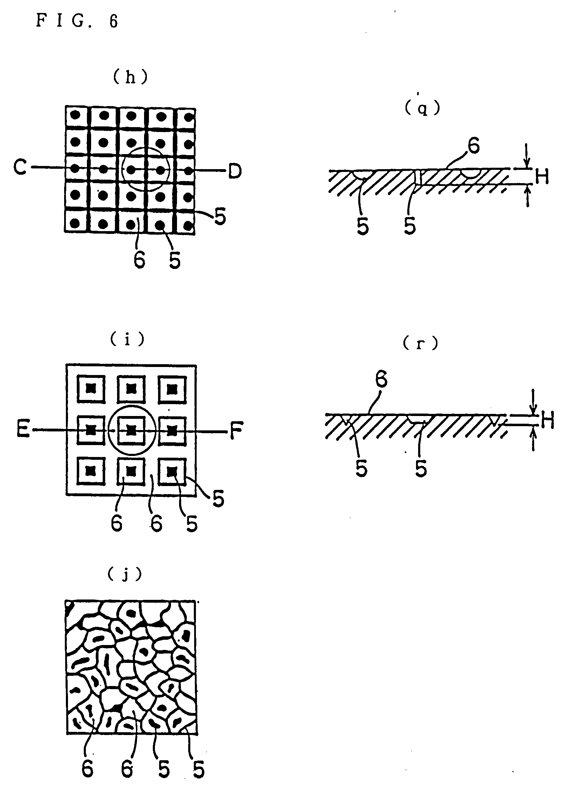

Fig. 6 shows an example (embodiment) of sliding bearing surface having recesses and protuberances each formed two-dimensionally independently, wherein Fig. 6 (h) is a combination of grooves and round dimples, Fig. 6(i) that of grooves of V-shaped cross section and square protuberances of trapezoid cross section, Fig. 6(j) sliding surface of miscellaneous shaped irregularity, Fig. 6(q) a sectional side view of Fig. 6(h) taken from the line C-D (the circled part is enlarged), and Fig. 6(r) a sectional side view of Fig. 6(i) taken from the line E-F (the circled part is enlarged).

## DETAILED DESCRIPTION OF THE INVENTION

(1) The foregoing "two-dimensionally random irregularity" is as follows. Conventionally, the shaft and sliding bearing are manufactured by cutting machining or grinding machining, or by injection molding using mold prepared through cutting or grinding machining. Observed on the surface of the sliding parts manufactured by those methods are cutting marks left by movement of the cutting tool (Fig. 3) or grinding marks left by movement of the grinding particles (Fig. 2).

The cut or grinded surface has small directional grooves formed as extending in the direction wherein the cutting tool or grinding particles are moved. Even on a surface appearing as a mirror are observed any directional grooves which are low in depth but extend along the direction of movement of small grinding particles.

In the meantime, in case of the so-called sandblast process applying natural sands, ceramic or metal powder or the like on the objective surface, non-directional or random irregularity is formed on the surface (Fig. 1).

The methods for forming the random irregularity on the sliding surface are etching method using chemicals, spark erosion machining or surface coating method using metal spraying, calorize or CVD. Also, a mold formed with the surface irregularity through those methods may be used for injection

4

molding to transcribe the irregularity onto the objective sliding surface.

The random irregularity when controlled to specific surface roughness can show effect improving sliding performance.

In detail, in case of the shaft, the sliding performance improving effect can be obtained when Rz values measured with ten point average roughness indicating method (Rz, JIS•B0601, 3-5) are controlled to 0.2 - 20 $\mu$m, preferably to 1 - 10 $\mu$m. When Rz values are lower than 0.2 $\mu$m, the irregularity is too small and an effective transfer film cannot be kept and formed on the sliding surface, leading to reduction of that effect. Also, Rz values when higher than 20 $\mu$m cause wear and friction to be not practical.

In case that random irregularity applied to the shaft surface is ununiform and there exist asperities locally, the corresponding bearing may be largely worn. Such trouble may be effectively remedied by first applying random irregularity and thereafter grinding (removing) only the end portion of the asperities on the surface. Surface treatment, such as, plating, chemical conversion coating or the like, may be provided on the surface applied with random irregularity according to the purpose for which they are used.

(2) A sliding bearing may show the effect improving sliding performance when the bearing has two-dimentionally random irregularity with Rz values being controlled to 20 - 500 $\mu$m, preferably to 40 - 300 $\mu$m. When Rz values are lower than 20 $\mu$m, the effect is small. When Rz values are higher than 500 $\mu$m, friction is effectively reduced but wear increases to be not practical.

Application of the irregularity is preferably to the whole surface (100%) of the sliding surface but may show effect when the rate of application is about 50%.

(3) The irregularity to be provided on the surface of sliding bearing may be provided with such a special pattern as a surface having a plurality of protuberances and/or recesses each formed two-dimensionally independently, other than the foregoing two-dimensionally random irregularity. The pattern may be uniform (Figs. 4(a)-(c), Figs. 5(e), (f) or Figs. 6(h), (i)) or ununiform (Fig. 4(d), Fig. 5(g) or Fig. 6(j)) in arrangement and shapes of the protuberances and recesses. When height of the protuberances and/or depth of the recesses are 20 $\mu$m or more, preferably 50 $\mu$m or more, they have effect for improving the sliding performance. The height and/or depth when lower than 20 $\mu$m leads to less appearance of the effect. Also, the depth and/or height have not an upper limit, but they correlate with width with respect to strength depending on thickness of the bearing or surface pressure applied thereto.

Application of that pattern is preferably to the whole surface (100%) of the sliding surface but may show effect when the rate of application is about 50%.

(4) Use of the shaft or sliding bearing applied with the surface irregularity in the above shape can provide an excellent sliding performance of low friction, low wear and less damages on the shaft surface surprisingly under dry sliding conditions without lubricating oil as seen in the comparative examples described later. As a result, the characteristics of low dust, long life expectancy (maintenance-free), low noise and oil-less can be achieved.

The processing providing surface irregularity may be effective even when applied individually to the shaft or the sliding bearing, and more effective when applied to both of the shaft and the sliding bearing used in combination.

Sliding parts of any kind of materials may be provided with the processing, so that suitable materials can be selected for their use.

(5) Examples of Application

Next, concrete applications of the present invention will be referred to.

Application 1 (random irregularity on the surface of metal shaft)

Heat rolls for thermal fixing equipment of copying machines, printers or the like are usually made of aluminium alloy, which is light and superior in heat conduction, for heat uniformity, shortening time for temperature rise and reducing inertia upon start-up and stoppage of the heat roll. Since the heat roll is used under the condition at high temperature and aluminium alloy is a relatively soft metal likely to be damaged on the surface, the sliding part is especially required to be improved for various aspects.

Experiments[1] describes the example in which aluminium is used for the shaft and the present invention is applied on the sliding surface, and Experiments[2] the example using iron alloy, minutely, stainless steel; SUS303 for the shaft and the present invention applied on the sliding surface.

In either case, the shaft applied with the present invention has an excellent sliding performance showing low coefficient of friction and low wear rate (the counter bearing). The shaft shows an excellent sliding performance without causing surface failure under a severe condition using as a material the soft metal, aluminium alloy at 200 °C in dry or non-lubrication state.

Application 2 (random irregularity on a plastic shaft)

Recently, particularly in electronic apparatuses, a shaft using a material of further smaller specific gravity than aluminium is required in view of low inertia and lightweight. For any parts of the apparatuses not requiring heat resistance and heat uniformity (heat conduction), engineering plastic, for example, aromatic polyketone, polyamide, polyacetal, polyamidimide, polyethylene terephthalate, or phenolic resin is used for the shaft solely or in combination or as a composite with fiber reinforcement or filler in place of aluminium. The present invention is applicable to these materials.

In case of those materials, the shaft may be provided on the surface with random irregularity having specific depth by the blast method or deformation processing using rotation ring with random irregularity. It is however the best way that the shaft is formed by injection molding using a mold, which previously provided on the inner surface with random irregularity by blast method, etc., to form random irregularity on the sliding surface.

Experiments[3] shows a test of a shaft having random irregularity on the sliding surface, showing a typical example of use of engineering plastic for the shaft formed with polyethylene terephthalate reinforced with glass fiber by injection molding with a mold.

The test showed a result of favourable sliding performance under dry condition.

Application 3 (random irregularity on ceramic shaft)

In respect of high hardness, lightweight, particularly high heat resistance and low coeffeicient of thermal expansion, using ceramic materials for the sliding parts is often required in a special field recently. Ceramics for the sliding parts are silicate, alumina, isotropic carbon, silicon carbide or silicon nitride ceramics.

A shaft using the above materials in electronic machines, printers, ventilating fans, cosmic facilities and nuclear facilities is required to have high durability under conditions at high or extremely low temperature and high vacuum. Also, use of fluid lubricant for the shaft is generally restrained in these devices since volatility of the lubricant cannot be fully prevented. The present invention is especially effectively applicable to such shaft.

Experiments[4] shows an example using glass, the silicate material, as a representative of ceramic materials. The shafts each having a mirror surface and a surface of directional irregularity, respectively were tested as control examples. In comparison with the control example, the shaft having two-dimensionally random irregularity on the surface according to the present invention were proved to achieve less wear on the counter bearing and have low coefficient of friction against the same.

Application 4 (random irregularity on sliding bearing)

The random irregularity when applied to the surface of sliding bearing other than the shaft's sliding surface may also show the effect improving the sliding performance. The sliding bearing are made usually of metal, ceramics or polymeric materials. The effect of the present invention can be exhibited particularly in the sliding bearing made of polymeric material that is particularly high in self-lubricity. The polymeric sliding bearing can be produced by means of injection molding quite effectively through mass-production at low cost in an industrial scale.

The polymeric materials suitably used for the sliding bearing are those having high self-lubricity and proper heat resistance, for example, thermoplastic resin such as fluorocarbon resin, polyacetal, polyamide, polyester, polyketone, polyamidimide, polyarylethernitrile or polyphenylene sulfide (PPS), and thermosetting resin such as polyimide, polybenzimidazol or phenolic resin.

The present invention is definitely effective when applied to the sliding bearing made of those materials each solely used. The invention can further exhibit a large effect when applied to the sliding bearing made of polymeric composite materials filled with fiber reinforcement such as aromatic polyamide fiber, glass fiber or carbon fiber, and/or solid lubricant such as polytetrafluoroethylene (PTFE), graphite, molybdenum disulfide, lead oxide, talc or mica. Also, trace amounts of lubricant which is low in vapor pressure and has fluidity may be combined.

Experiments[5] shows an example of application of random irregularity on the surface of sliding bearing, wherein PPS filled with PTFE was used as the material for the sliding bearing and subjected to injection molding to form a sliding bearing having on the surface two-dimensionally random irregularity of Rz values

of 23 - 430 μm which bearing was tested.

From results of experimental trials, an effective range of Rz values of the irregularity on the sliding bearing was 20 to 500 μm differing from the case of the shaft.

Resultantly, it is apparent that provision of random irregularity with specific roughness on the sliding bearing is an effective method for improving the sliding performance.

Application 5 (irregularity having special pattern on sliding bearing)

The sliding bearing when provided on the surface with an irregularity in a special pattern other than the foregoing random irregularity can be given the effect improving the sliding performance. Mechanism by which the effect appears is unidentified but is inferred as the same mechanism as in the case of the sliding bearing applied with random irregularity.

The special pattern is a surface configuration having a plurality of protuberances and/or recesses each formed two-dimensionally independently. Sliding performance may be improved with the protuberances formed independently as shown in Fig. 4, with the recesses formed independently as shown in Fig. 5 or with the combination of independently formed protuberances and recesses as seen in Fig. 6, in comparison with the case using a plain surface.

Shapes of the independent protuberances or recesses may be uniform such as round, square or hexagonal as shown in Figs. 4(a)-(c), Figs. 5(e) and 5(f) and Figs. 6(h) and 6(i), or ununiform as seen in Fig. 4(d), Fig. 5(g) and Fig. 6(j). Also, distribution of the protuberances or recesses may or may not have regularity.

Experiments[6],[7] and [8] show test results of a sliding bearing provided on the surface with a plurality of independent protuberances and/or recesses.

When height H1 (or depth H2) of the independent protuberances or recesses is 20 μm or more, preferably 50 μm or more, a favourable result can be obtained.

As clearly seen in the control examples, when H1 or H2 is lower than 20 μm, a favourable result cannot be obtained.

Methods for forming the irregularity having those patterns on the surface of sliding bearing are machine work machining directly the surface of sliding bearing by use of machine tool such as lathe or milling machine, or such an economically most preferable method as injection molding using a mold, which is preliminarily provided on an inner surface of the cavity with a desired irregularity by machine work or etching, to transcribe the irregularity onto the bearing when made of polymeric materials.

Collapsible core type or built-up core type of mold can be selected depending upon the shapes of the sliding bearings.

EXPERIMENTS

Next, the sliding member in relation to the present invention will be detailed with referring to the results of experiments. Control examples not according to the invention will be also described for the purpose of comparison.

[ I ] Experiments on shaft

(1) Experiments

Experiments[1] - in case of sliding shaft made of aluminium alloy

Preparation for Specimen

In examples 1 to 6 and control examples 1 to 8 shown in Table 1, a rod-like shaft member made of aluminium alloy A5056 and φ 20 × 250L was evaluated as a test piece. First, the subject surface of the shaft member was mirror-grinded to 0.1 μm or lower of Rz values in 10 point average roughness. For the examples 1 to 6 and control examples 1 and 2, the surface was applied with alumina particles of different diameters by a sandblaster to have two-dimensionally random irregularity having a predetermined roughness, followed by being subjected to the test. For control examples 3 to 8, the subject surface was subjected to the conventional machine work method (cutting and grinding machining) to have two-dimensionally directional predetermined roughness, followed by testing.

Test Method

The counter bearing and conditions for test for the examples 1 to 6 and control examples 1 to 8 are as follows. The counter bearing $\underline{A}$ is made of a polymeric material having the composition shown in the control example 1 referred to in Japanese Unexamined Patent Application No. Sho 62-10166(1987) and molded into a bush-like shape of $\phi$ 20 × $\phi$ 23 × 15, followed by testing. Details of the fabricating method and material composition of the bush are as shown in the Japanese Publication.

Conditions for Test

Tester: Radial journal bearing tester
Sliding speed: 8.4m/min.
Contact pressure: 6kgf/cm$^2$
Temperature: 200°C
Lubrication: dry
Time for test: 100hrs

Composition of Counter Bearing $\underline{A}$

PPS/aromatic polyamide fiber/PTFE/PbO(lead oxide) = 55/15/22/8 (volume ratio)

(State of the surface: plain surface)

Experiments[2] - in case of sliding shaft made of iron alloy

Preparation for Specimen

In examples 7 to 11 and control examples 9 to 17 shown in Table 2, a disc-like shaft member made of stainless steel SUS303 and $\phi$ 20 × $\phi$ 70 × 7t was evaluated as a test piece. First, the subject surface of the shaft member was mirror-grinded to 0.1 μm or lower of Rz values in 10 point average roughness. For the examples 7 to 11 and control examples 9 and 10, the surface was applied with alumina particles of different diameters by a sandblaster to have two-dimensionally random irregularity having a predetermined roughness, followed by being subjected to the test.

For control examples 11 to 17, the subject surface was subjected to the conventional machine work method (cutting and grinding machining) to have two-dimensionally directional predetermined roughness, followed by testing.

Test method

The counter bearing $\underline{B}$ and conditions for test for the examples 7 to 11 and control examples 9 to 17 are as follows.

Composition of Counter Bearing $\underline{B}$

PPS/PTFE = 80/20 volume ratio

(PPS resin and PTFE powder were mixed by a mixer, pelletized by a kneading/extruding machine and molded by an injection molding machine to be in a pin-like shape of $\phi$ 5 × 10.)
(State of the surface: plain surface)

Conditions for Test

Tester: Pin-on-disc type friction/wear tester
Sliding speed: 30m/min.
Contact pressure: 3kgf/cm$^2$
Temperature: 25 °C
Lubrication: dry
Time for test: 20hrs

8

Experiments[3] - Plastic shaft

Preparation for Specimen and Test method

Polyethylene terephthalate reinforced with glass fiber (30 wt%) (commercially available, called GFRPET hereunder) was used as a shaft member and the foregoing bearing member B (pin-like form, $\phi$ 5 × 10) as a counter bearing member.

The shaft in the example 13 (disc-like form, $\phi$ 20 × $\phi$ 70 × 3t) was molded by injection molding using a cavity surface of a mold which machined by spark-erosion in oil bath having copper plates as opposite electrodes, so as to have two-dimensionally random irregularity on the surface, followed by testing. For control example 20, a shaft was molded by injection molding using a grinded mold so as to be provided with two-dimensionally directional irregularity on the surface, followed by testing.

Test conditions are as follows.

Conditions for Test

Tester: Pin-on-disc type friction/wear tester
Sliding speed: 6m/min.
Contact pressure: 5kgf/cm$^2$
Temperature: 25 °C
Lubrication: dry
Time for test: 20hrs

Experiments[4] - Ceramic shaft

Preparation for Specimen and Test method

A plate glass of 1.5mm in thickness cut into a disc-like shape ( $\phi$ 70) was used as a shaft member, and the foregoing bearing member B ($\phi$ 8 × 10) as a counter bearing member.

Used for example 14 was a commercially available frosted glass plate having two-dimensionally random irregularity, and for control example 21 a commercially available glass plate substantially having mirror surface without irregularity, and also for control example 22 the glass plate having the mirror sourface ground to have thereon directional irregularity, each subjected to testing as specimen.

Test conditions are as follows.

Conditions for Test

Tester: Pin-on-disc type friction/wear tester
Sliding speed: 30m/min.
Contact pressure: 3kgf/cm$^2$
Temperature: 25 °C
Lubrication: dry
Time for test: 20hrs

(2) Results of Experiments on Shaft

Results of the experiments [1] to [4] by evaluation of the test pieces above are as shown in Tables 1 to 3.

Calculating method of wear factor and friction coefficient referred to in the tables is as follows.

Wear factor on the counter bearing

Wear depth of the counter bearing was measured by displacement gauge and converted by calculation to wear volume. The wear volume was divided by product of sliding distance and added load to obtain wear factor (lower values are favourable).

Friction coefficient

Frictional force generated from sliding was measured by a load converter. The measured frictional force was divided by added load to obtain friction coefficient (lower values are favourable).

Results of visual observation on the appearance of the tested shaft removed after finish of the series of experiments are cited at the item "Damage on shaft surface" in which those marked by ○ are determined to be good in durability and those X to be poor in durability.

(3) Conclusion from Experimental Results on Shaft

a. The experiments[1] shows influences of surface irregularity of a rod-like aluminium alloy shaft on wear of counter bearing, durability of shaft and friction. Experiments controlled to roughness of the present invention by sandblast method showed notable effect in respect of wear resistance of counter bearing, friction coefficient and shaft's durability even under severe condition of dry sliding at 200 °C in comparison with the control examples given surface machined by the conventional method.

b. The experiments[2] is sliding test using the pin-on-disc type friction/wear tester and tested sliding properties with respect to thrust wear.

Test pieces used stainless steel having high general-purpose properties among steel products. The examples controlled to roughness of the present invention showed the effects in wear-resistance on counter bearing and friction coefficient, and particularly improved the wear resistance on the counter bearing. The specimens marked by * at the right margin of Table 2 correspond to Fig. 1 (Examples) and Figs. 2 and 3 (Control Examples), respectively.

c. Exmperiments[3] is an example of test of a GFRP disc comprising the so-called engineering plastic (PET in the example) reinforced with glass fiber.

In this example, the tested disc was prepared by injection molding, and the cavity of the mold was formed by spark-erosion using copper as opposite electrodes. Roughness on the inner surface of the cavity was 5.6 μm of Rz values. A mold cavity used in the control example was first worked by grinding to gross size before further precise finish with grinding sandpaper to have surface roughness of 3.3 μm of Rz values.

Surface roughness of molded specimen (GFRPET) was almost near the surface roughness of cavity. The surface finished by grinding was superior in evenness in comparison with that subjected to spark-erosion. In respec of sliding properties, the surface finished by the method of the present invention showed more excellent effects with respect to wear resistance on the counter bearing and friction coefficient. This may be inferred as that random irregularity on the surface of molded specimen largely contributes to improvement of sliding properties. Translation of mechanism improving the sliding properties is not limited to the above.

d. Experiments[4] is an example testing a disc-like shaft made of glass, a kind of ceramics. Glass plate having a mirror surface with almost no irregularity (control example 21) causes less wear on the counter bearing but is quite high in friction coefficient. Also, glass plate provided with directional irregularity by grinding machining (control example 22) causes much wear on the counter bearing. Example 14 provided with non-directional random irregularity controlled to a predetermined roughness showed excellent properties in friction and wear on the counter bearing.

[ II ] Experiments on Sliding Bearing

(1) Experiments

Experiments[5] - sliding bearing having two-dimensionally random irregularity

(Examples 15, 16, 17 and 18, and Control Examples 23, 24, 25 and 26)

Preparation and Materials of Specimen

Polyphenylene sulfide resin (called PPS hereunder) and polytetrafluoroethylene powder (PTFE) were used for the bearing and mixed by a mixer in volume ratio of 8:2 and pelletized by a kneading/extruding machine. Examples 15 to 18 and control examples 25 and 26 molded the pellets into a plate-like bearing of φ 12 × 3t by injection molding using a mold which has a cavity provided, through etching, with two-dimensionally random predetermined irregularity for testing the bearing.

Control examples 23 and 24 molded the pellets into a plate-like bearing of $\phi$ 12 $\times$ 3t by injection molding using a mold which has a cavity provided, through grinding, with directional predetermined roughness for testing the bearing. The counter surface for the sliding test used stainless steel SUS303 and the surface of disc-like specimen of $\phi$ 20 $\times$ $\phi$ 70 $\times$ 7t was finished by lathe work to have about 2 $\mu$m of 10 point, average roughness (Rz), followed by testing.

Conditions for Test

Tester: Pin-on-disc type friction/wear tester
Sliding speed: 30m/min
Contact pressure: 1 kgf/cm$^2$
Temperature: 25°C
Lubrication: dry
Time for test: 20 hrs

Experiments[6] - sliding bearing having a plurality of two-dimensionally independent protuberances

(Examples 19, 20 and 21 and Control Examples 27 and 28)

Preparation and Materials of Specimen

PPS, aromatic polyamide fiber, PTFE and lead monoxide were used for the bearing and mixed by a mixer in volume ratio of 55:15:22:8 and pelletized by a kneading/extruding machine. In control example 27, the pellets were molded into bush of bearing specimen of $\phi$ 20 $\times$ $\phi$ 23 $\times$ 15L by injection molding using a mold which has a core grinded to about 1 $\mu$m of ten point average roughness, followed by testing.

As a bearing specimen of Examples 19 and 21 and control example 28, the molded bush was machined to have a plurality of two-dimensionally independent protuberances on the inner diameter surface, the subject surface, followed by testing.

A bearing specimen of Example 20 when molded by injection molding using a mold having collapsible core with predetermined recesses was provided on the inner diameter surface (the surface to be tested) with a pluratily of two-dimensionally independent protuberances, followed by testing.

The protubernaces formed on the inner diameter surface are in the pattern shown in fig. 4(b) and 2mm square and spaced away to one another at an interval of 1mm. Used as a counter shaft for sliding test was a rod-like shaft made of aluminium alloy A5056 and grinded on the surface of $\phi$ 20 $\times$ 250L at about 6 $\mu$m of ten point average roughness, followed by testing.

Conditions for Test

Tester: Radial journal bearing tester
Sliding speed: 8.4m/min
Contact pressure: 6 kgf/cm$^2$
Temperature: 200 °C
Lubrication: dry
Time for test: 100 hrs

Experiments[7] - sliding bearing having a plurality of two-dimensionally independent recesses

(Examples 22, 23 and 24 and Control Examples 29 and 30)

Preparation and Materials of Specimen

Polyacetal resin (called POM hereunder) and polytetrafluoroethylene powder (PTFE) were used for the bearing and mixed by a mixer in volume ratio of 8:2 and pelletized by a kneading/extruding machine. In control example 29 the pellets were molded into a plate-like bearing specimen of $\phi$ 12 $\times$ 3t by injection molding using a mold which has a cavity grinded to about 1 $\mu$m of ten point average roughness, followed by testing.

As a bearing specimen of Examples 22, 23 and 24 and control example 30, the molded plate-like bearing specimen was machined to have a plurality of two-dimensionally independent recesses on the subject surface, followed by testing. The recesses formed on the surface of plate-like bearing are in the pattern shown in Figs. 5(e) and 5(n) and round of 1mm in diameter and spaced from one another at an interval of 2mm between the central points. Used as a counter shaft for sliding test was a disc-like shaft made of stainless steel SUS303 and worked by use of lathe on the surface of disc-like specimen of $\phi$ 20 × $\phi$ 70 × 7t at about 2 $\mu$m of ten point average roughness (Rz), followed by testing.

Conditions for Test

Tester: Pin-on-disc type friction/wear tester
Sliding speed: 30m/min
Contact pressure: 3 kgf/cm$^2$
Temperature: 25°C
Lubrication: dry
Time for test: 20 hrs

Experiments[8] - sliding bearing having a plurality of two-dimensionally independent protuberances and recesses

(Examples 25, 26 and 27 and Control Examples 29 and 31)

Preparation and Test Method

Materials of specimen and test conditions are the same as Experiments [7].

As a bearing specimen of Examples 25, 26 and 27 and control example 31, the molded plate-like bearing specimen ($\phi$ 12 × 3t) was machined to have a plurality of two-dimensionally independent protuberances and recesses on the subject surface, followed by testing. The surface of these specimens have, as shown in Figs. 6(h) and 6(q), protuberances of 2.5mm square spaced from one another at an interval of 1mm, with round ($\phi$ 0.8) recesses in center of the protuberances. Control example 29 is quoted from Experiments [7].

(2) Results of Experiments on Sliding Bearing

Results of the experiments[5] to [8] by evaluation of the test pieces above are as shown in Tables 5 to 8.

Calculating method of wear factor and coefficient of friction referred to in the tables is as follows.

Wear factor on the bearing

Wear depth of the bearing was measured by displacement gauge and converted by calculation to wear volume. The wear volume was divided by product of sliding distance and added load to obtain wear factor (lower values are favourable).

Friction coefficient

Frictional force generated from sliding was measured by a load converter. The measured frictional force was divided by added load to obtain friction coefficient (lower values are favourable).

Results of visual observation on the appearance of the counter metal disc or shaft removed after finish of the series of experiments are cited at the item "Damage on the counter surface" in which those marked by ○ are determined to be good in durability of the counter surface and those X to be poor in durability.

(3) Conclusion from Experimental Results on Sliding Bearing

a. Table 5 (Experiments[5]) shows results of comparative experiments on the bearing surface provided or not provided with random iregularity, or with surface roughness in or out of the range of 20 to 500 $\mu$m. The results show that directional irregularity provided by injection molding with ground cavity surface cause much wear even when the surface has low roughness, and that the surface having random irregularity when the surface roughness is out of the predetermined range is subjected to much wear.

EP 0 661 470 A2

b. Table 6 (Experiments[6]) shows results of comparative experiments on the bearing surface provided or not provided with many independent protuberances, or with its height being 20 μm or higher or lower.

The results show that the bearing surface when not provided with the protuberances or their height are higher than a predetermined value increases wear and damages the counter shaft.

c. Table 7 (Experiments[7]) shows results of comparative experiments on the bearing surface provided or not provided with many independent recesses or with its depth being 20μm or higher or lower.

The results show that the bearing surface when not provided with the recesses (plain surface) or their depth are lower than 20μm increases wear.

d. Table 8 (Experiments[8]) shows results of comparative experiments on the bearing surface provided or not provided with many independent protuberances and recesses or with its height being 20μm or higher or lower.

The results show that the bearing surface when not provided with protuberances and recesses (plain surface) or their height are lower than 20 μm increases wear.

Table 1

| Experimental Results (Experiments[1]) | | | | | |
|---|---|---|---|---|---|
| | Shaft surface machined by | Roughness of shaft surface Rz, μm | Experimental Results | | |
| | | | wear factor of counter bearing mm$^3$/mmkg, $\times 10^{-9}$ | coefficient of friction | surface failure of shaft |
| Example 1 | sandblast | 0.32 | 3.5 | 0.12 | ○ |
| Example 2 | " | 0.56 | 2.9 | 0.12 | ○ |
| Example 3 | " | 1.03 | 1.5 | 0.09 | ○ |
| Example 4 | " | 2.20 | 1.5 | 0.09 | ○ |
| Example 5 | " | 6.04 | 2.0 | 0.07 | ○ |
| Example 6 | " | 12.5 | 3.2 | 0.08 | ○ |
| Con.Ex. *1 | " | 0.14 | 62 | 0.16-0.30 | X |
| Con.Ex. 2 | " | 25.2 | 21 | 0.20 | ○ |
| Con.Ex. 3 | grinding | 1.15 | 64 | 0.17-0.28 | X |
| Con.Ex. 4 | " | 2.22 | 45 | 0.15-0.25 | X |
| Con.Ex. 5 | " | 6.01 | 36 | 0.14-0.23 | X |
| Con.Ex. 6 | cutting | 2.18 | 68 | 0.17-0.30 | X |
| Con.Ex. 7 | " | 6.25 | 53 | 0.15-0.27 | X |
| Con.Ex. 8 | " | 12.3 | 46 | 0.14-0.25 | X |

* Con.Ex. is control example.

13

# EP 0 661 470 A2

Table 2

| | | | Experimental Results (Experiments[2]) | | | |
|---|---|---|---|---|---|---|
| | Shaft surface machined by | Roughness of shaft surface Rz, $\mu$m | Experimental Results | | | |
| | | | wear factor of counter bearing mm$^3$/mmkg, $\times$ 10$^{-8}$ | coefficient of friction | surface failure of shaft | |
| Example 7 | sandblast | 0.26 | 8.8 | 0.24 | ○ | |
| Example 8 | " | 1.05 | 2.9 | 0.23 | ○ | |
| Example 9 | " | 2.32 | 5.3 | 0.20 | ○ | |
| Example10 | " | 6.31 | 38.8 | 0.20 | ○ | *1 |
| Example11 | " | 12.3 | 41 | 0.22 | ○ | |
| Con.Ex. 9 | " | 0.13 | 88 | 0.26 | ○ | |
| Con.Ex.10 | " | 22.5 | 980 | 0.26 | ○ | |
| Con.Ex.11 | grinding | 0.31 | 87 | 0.27 | ○ | |
| Con.Ex.12 | " | 1.13 | 120 | 0.25 | ○ | |
| Con.Ex.13 | " | 2.26 | 430 | 0.24 | ○ | |
| Con.Ex.14 | " | 6.15 | 950 | 0.23 | ○ | *2 |
| Con.Ex.15 | cutting | 2.10 | 110 | 0.25 | ○ | |
| Con.Ex.16 | " | 6.32 | 380 | 0.23 | ○ | *3 |
| Con.Ex.17 | " | 12.1 | 730 | 0.23 | ○ | |

Note: *1, 2 and 3 correspond to microphotographs shown in Figs. 1 to 3.

Table 3

| | | | Experimental Results (Experiments[3]) | | | |
|---|---|---|---|---|---|---|
| | Mold machined by: | Surface roughness of mold cavity Rz, $\mu$m | Experimental Results | | | |
| | | | wear factor of counter bearing mm$^3$/mmkg, $\times$ 10$^{-8}$ | coefficient of friction | surface failure of shaft | |
| Example 13 | spark-erosion | 5.6 | 6.5 | 0.20 | ○ | |
| Con.Ex. 20 | grinding | 3.3 | 42 | 0.24 | ○ | |

14

Table 4

| | Kinds of shaft | Surface roughness of shaft Rz, $\mu$m | Experimental Results | | |
|---|---|---|---|---|---|
| | | | wear factor of counter bearing mm$^3$/mmkg, $\times$ 10$^{-8}$ | coefficient of friction | surface failure of shaft |
| Example 14 | frosted glass (random irregularity) | 10.5 | 1.8 | 0.16 | ◯ |
| Con.Ex. 21 | plate glass | 0.07 | 2.2 | 0.55 | ◯ |
| Con.Ex. 22 | ground plate glass (directional irregularity) | 10.3 | 75.0 | 0.25 | ◯ |

Table 5

Experimental Results (Experiments[5])

| | Directionality of irregularity on the bearing surface | Surface roughness of bearing Rz, $\mu$m | wear factor of bearing mm$^3$/mmkg, $\times$ 10$^{-8}$ | coefficient of friction | surface failure of counter face |
|---|---|---|---|---|---|
| Example 15 | none | 23 | 15 | 0.23 | ◯ |
| Example 16 | " | 56 | 6.5 | 0.20 | ◯ |
| Example 17 | " | 220 | 8.7 | 0.18 | ◯ |
| Example 18 | " | 430 | 13 | 0.17 | ◯ |
| Con.Ex. 23 | yes | 3 | 160 | 0.25 | ◯ |
| Con.Ex. 24 | " | 25 | 120 | 0.24 | ◯ |
| Con.Ex. 25 | none | 12 | 85 | 0.24 | ◯ |
| Con.Ex. 26 | " | 620 | 65 | 0.17 | ◯ |

Table 6

| | Height of protuberances on the bearing surface, $\mu$m | Experimental Results | | |
|---|---|---|---|---|
| | | wear factor of bearing mm$^3$/mmkg, $\times$ 10$^{-9}$ | coefficient of friction | surface failure of counter face |
| Example 19 | 32 | 8.3 | 0.13 | ◯ |
| Example 20 | 250 | 5.4 | 0.10 | ◯ |
| Example 21 | 600 | 5.8 | 0.10 | ◯ |
| Con.Ex. 27 | (plain) | 36 | 0.15-0.27 | X |
| Con.Ex. 28 | 12 | 30 | 0.13-0.25 | X |

Table 7

| Experimental Results (Experiments[7]) | | | | |
|---|---|---|---|---|
| | Depth of recesses on the bearing surface, $\mu$m | Experimental Results | | |
| | | wear factor of bearing mm$^3$/mmkg, $\times$ 10$^{-8}$ | coefficient of friction | surface failure of counter face |
| Example 22 | 30 | 9.2 | 0.30 | ○ |
| Example 23 | 250 | 6.8 | 0.27 | ○ |
| Example 24 | 600 | 7.1 | 0.27 | ○ |
| Con.Ex. 29 | (plain) | 47 | 0.35 | ○ |
| Con.Ex. 30 | 11 | 40 | 0.33 | ○ |

Table 8

| Experimental Results (Experiments[8]) | | | | |
|---|---|---|---|---|
| | Height of protuberances on the sliding surface of bearing, $\mu$m | Experimental Results | | |
| | | wear factor of bearing mm$^3$/mmkg, $\times$ 10$^{-8}$ | coefficient of friction | surface failure of counter face |
| Example 25 | 30 | 9.2 | 0.29 | ○ |
| Example 26 | 250 | 5.1 | 0.28 | ○ |
| Example 27 | 600 | 6.0 | 0.27 | ○ |
| Con.Ex. 29 | (plain) | 47 | 0.35 | ○ |
| Con.Ex. 31 | 10 | 35 | 0.34 | ○ |

**Claims**

1. A sliding shaft member provided on the surface of a sliding part with two-dimensionally random irregularity of ten point average roughness of 0.2 to 20$\mu$m by Rz indication.

2. A sliding shaft member as set forth in claim 1, wherein a material for the sliding part is iron steel including stainless steel, aluminium alloy, copper alloy, ceramics or a polymeric material including those reinforced with fibers.

3. A sliding shaft member as set forth in claim 1, wherein a method for applying irregularity on the surface of the sliding part is blasting, etching (for metal materials) or deformation processing (for metal materials).

4. A sliding shaft member as set forth in claim 1, wherein application of irregularity on the surface of the sliding part is carried out by injection molding of a polymeric material by use of irregularity preliminarily formed on an inner surface of a mold.

5. A sliding device which uses in dry condition a sliding shaft member provided on the surface of a sliding part with two-dimensionally random irregularity of ten point average roughness of 0.2 to 20$\mu$m by Rz indication.

6. A sliding shaft for heat roll housed in a copying machine or a printer wherein the sliding shaft is made of aluminium alloy and provided on the surface of a sliding part with two-dimensionally random irregularity of ten point average roughness of 0.2 to 20$\mu$m by Rz indication.

7. A sliding bearing provided on the surface of a sliding part with two-dimensionally random irregularity of ten point average roughness of 20 to 500$\mu$m by Rz indication.

8. A sliding bearing provided on the surface of a sliding part with a plurality of two-dimensionally independent protuberances of 20 $\mu$m or more in height.

9. A sliding bearing provided on the surface of a sliding part with a plurality of two-dimensionally independent recesses of 20 $\mu$m or more in depth.

10. A sliding bearing provided on the surface of a sliding part with a plurality of two-dimensionally independent protuberances and recesses of 20$\mu$m or more in height or depth.

11. A sliding bearing as set forth in claims 7, 8, 9 and 10 wherein a principal base material for the sliding bearing is a thermoplastic or thermosetting polymeric material.

12. A sliding bearing as set forth in claims 7, 8, 9 and 10 wherein irregularity on the sliding surface is formed by injection molding using a mold preliminarily provided with irregularity or a collapsible or built-up core.

F I G. 1

F I G. 2

F I G. 3

F I G. 4

(a)

(t)

(b)

(c)

(m)

(d)

FIG. 5

(e)

(n)

(f)

(p)

(g)

FIG. 6

(h)

(q)

(i)

(r)

(j)